# EUROPEAN PATENT APPLICATION

(11) **EP 3 159 253 A1**
(43) Date of publication of application: **26.04.2017**
(21) Application number: 15201401.5
(22) Date of filing: 18.12.2015
(51) Int. Cl.: B62M 3/08

(54) **BICYCLE AND CONTROL METHOD THEREOF**

(30) Priority: 20.10.2015 KR 20150145905
(71) Applicant: Mando Corporation, Gyeonggi-do 451-821 (KR)
(72) Inventor: PAICK, In-Ha, Seoul (KR)
(74) Representative: Pfenning, Meinig & Partner mbB

(57) **Abstract**

Disclosed herein are a bicycle and a control method of the same. The bicycle includes an electromagnet (70) installed in a pedal body (60) rotatably coupled to a pedal shaft and configured to generate a magnetic force when power is supplied thereto, a switching unit (100) configured to switch on or off the power supplied to the electromagnet (70), and an electronic control unit (40) configured to turn on or off the switching unit (100).

## Description

### CROSS-REFERENCE TO RELATED APPLICATION

This application claims the benefit of Korean Patent Application No. 2015-0145905, filed on October 20, 2015 in the Korean Intellectual Property Office, the disclosure of which is incorporated herein by reference.

### BACKGROUND

### 1. Field

Embodiments of the present invention relate to a bicycle and a control method of the same, and more particularly, to a bicycle including a cleat pedal which is coupled to a rider's shoes for effective pedaling and a control method of the same.

### 2. Description of the Related Art

In general, while a bicycle is traveling, since the rider's feet are not fixed to the bicycle's pedals, the rider's feet slip easily, and since his or her knees are together, it is difficult for the rider to maintain an effective pedaling posture.

Recently, a cleat pedal which is fixed to a rider's shoe has been used to prevent slippage from the pedal and to use a force effectively when pedaling.

Since such a cleat pedal is fixed to the bottom of the shoe, a pedal down stroke force and pedal up stroke force are dispersed and the number of pedaling strokes is increased. Accordingly, the pedaling is performed at the same position, a correct posture is maintained, and the feet do not slip, and thus it helps in long distance traveling and traveling on a hill.

When a shoe is coupled to a cleat pedal, a coupling protrusion provided on the bottom of the shoe is coupled to a coupling groove of the cleat pedal, and when the coupling is released, the coupling is released by turning the shoe at a predetermined angle and withdrawing the coupling protrusion of the shoe from the coupling groove of the pedal.

However, because of a characteristic that the bottom of a shoe is not seen, conventionally, it is difficult for the rider to match and couple the coupling protrusion of the shoe to the coupling groove of the pedal.

In addition, since the shoe is turned at a predetermined angle and the coupling protrusion of the shoe is withdrawn from the coupling groove of the pedal when the coupling is released, when a rider rides the bicycle for a long time, the rider may forget that the shoe is coupled to the cleat pedal when stopping, or suddenly stopping due to something unexpected happening, and the rider may fall down and become injured when the rider cannot withdraw the shoe from the pedal.

### SUMMARY

Therefore, it is an aspect of the present invention to provide a bicycle capable of conveniently and safely coupling a rider's shoe and a cleat pedal and releasing from the coupling.

Additional aspects of the invention will be set forth in part in the description which follows and, in part, will be obvious from the description, or may be learned by practice of the invention.

In accordance with one aspect of the present invention, a bicycle includes: an electromagnet installed in a pedal body rotatably coupled to a pedal shaft and configured to generate a magnetic force when power is supplied thereto; a switching unit configured to switch on or off the power supplied to the electromagnet; and an electronic control unit configured to turn on or off the switching unit.

The pedal body may include a cleat pedal body.
The bicycle may further includes a speed sensor which senses a speed of the bicycle, wherein the electronic control unit may control operation of the switching unit according to the sensed speed of the bicycle.

When the sensed speed of the bicycle is decreased to a predetermined speed while the bicycle is traveling, the electronic control unit may turn off the switching unit to cut off the power supplied to the electromagnet.

The bicycle may further include a speed sensor which senses a deceleration of the bicycle, wherein the electronic control unit may control operation of the switching unit according to a change of the sensed deceleration of the bicycle.

The bicycle may further include an input unit configured to receive a command from a rider, wherein the electronic control unit may control operation of the switching unit according to the command input through the input unit.

The bicycle may further include a speed sensor configured to sense a speed of the bicycle, wherein the electromagnetic including a plurality of electromagnets may be provided at the pedal body, and the electronic control unit may control operation of the switching unit so that as the sensed bicycle speed is decreased, the number of the electromagnet to which power is supplied among the plurality of electromagnets is decreased.

In accordance with another aspect of the present invention, a control method of a bicycle including a cleat pedal in which an electromagnet which is supplied with power and generates a magnetic force is installed, includes: supplying power to an electromagnet while a bicycle is traveling; sensing a speed of the bicycle; and cutting off the power supplied to the electromagnet when the sensed speed of the bicycle is decreased to a predetermined speed or when a change of the sensed deceleration of the bicycle is greater than a predetermined value.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a configuration diagram illustrating an electric bicycle according to one embodiment of the present invention;
FIG. 2 is a configuration diagram illustrating a cleat pedal of the electric bicycle according to one embodiment of the present invention;
FIG. 3 is a view for describing a shoe coupled to the cleat pedal of the electric bicycle according to one embodiment of the present invention;
FIG. 4 is a control block diagram of the electric bicycle according to one embodiment of the present invention;
FIG. 5 is a control flow chart of a control method of the electric bicycle according to one embodiment of the present invention;
FIG. 6 is a control block diagram of an electric bicycle according to another embodiment of the present invention;
FIG. 7 is a control block diagram of an electric bicycle according to still another embodiment of the present invention; and
FIG. 8 is a configuration diagram illustrating a cleat pedal of the electric bicycle according to yet another embodiment of the present invention.

### DETAILED DESCRIPTION

Hereinafter, embodiments of the present invention will be described in detail with reference to following drawings. The following drawings are examples to provide the scope of the present invention to those skilled in the art. The present invention is not limited to the following embodiments and may be implemented in different forms. Parts irrelevant to description are omitted in the drawings in order to clearly describe the present invention, and widths, lengths, thicknesses of components in the drawings may be exaggerated for convenience of description. In this specification, like reference characters denote like components.

In the embodiments, a chainless electric bicycle is described as an example, however, they are not limited thereto, the embodiments of the present invention may be applied to an electric bicycle or a general bicycle by suitable modifications and variations.

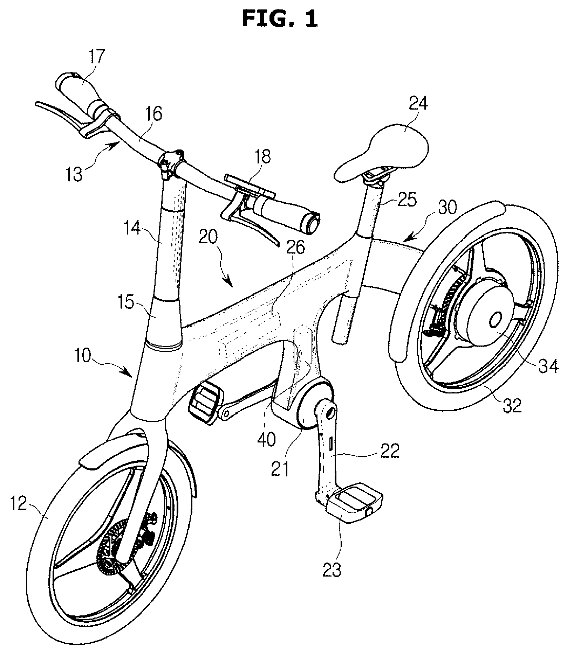

FIG. 1 is a block diagram illustrating an electric bicycle according to one embodiment of the present invention.

Referring to FIG. 1, an electric bicycle may include a front frame 10, a middle frame 20, and a rear frame 30.

The front frame 10 may include a front wheel 12, and a handle stay 14 connected to a handle 13.

The handle 13 may include a handle stem 15 coupled to a lower end of the handle stay 14, a handle bar 16 coupled to the handle stay 14, and a handle grip 17 installed on the handle bar 16.

The front wheel 12 is rotatably coupled to one side of a lower end of the handle stay 14. The handle stem 15 is provided for adjusting a height of the handle 13. The handle bar 16 is provided for determining the steering of the bicycle. An interface 18 which displays a state of the electric bicycle to a user and transfers a requirement of the user to an electronic control unit 40 using a button or a display is provided on the handle grip 17. Such an interface 18 is electrically connected to the electronic control unit 40 through wired or wireless communication.

A power generator 21 is provided at one end of the middle frame 20, cleat pedals 23 are installed at both sides of the power generator 21 to be rotatable by crank arms 22. One end of each of the crank arms 22 is rotatably coupled to a pedal shaft of the middle frame 20, and the cleat pedal 23 is rotatably coupled to the other end thereof. When a rider rotates the cleat pedal 23, a rotational force of the cleat pedal 23 is converted into electrical energy by the power generator 21, and the electrical energy of the power generator 21 may be accumulated in a battery 26 provided in the middle frame 20.

The middle frame 20 may further include a saddle tube 25 for installing a saddle 24.

A rear wheel 32 is rotatably installed at one side of an end of the rear frame 30. A motor 34 for rotating the rear wheel 32 and advancing the electric bicycle is installed at the center of the rear wheel 32. The motor 34 may include a transmission so that a rider changes a rotational speed of the rear wheel 32 using the interface 18 or a throttle.

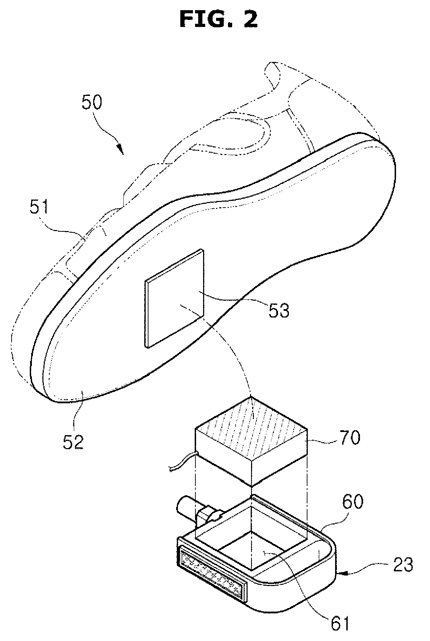

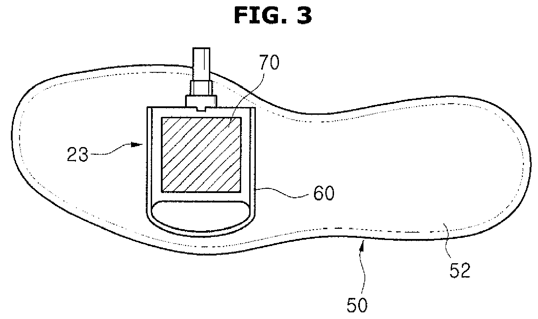

FIG. 2 is a configuration diagram illustrating a cleat pedal of the electric bicycle according to one embodiment of the present invention, and FIG. 3 is a view for describing a shoe coupled to the cleat pedal of the electric bicycle according to one embodiment of the present invention.

Referring to FIGS. 2 and 3, a shoe 50 may include an upper shoe part 51 and a shoe sole 52.

On the shoe sole 52, at least one magnetic body 53 is provided at a position corresponding to the cleat pedal 23 of the electric bicycle.

The magnetic body 53 is integrally formed on the shoe sole 52 or detachably provided on the shoe sole 52.

The cleat pedal 23 may include a pedal body 60 coupled to the crank arm 22, and an electromagnet 70 disposed in the pedal body 60.

The electromagnet 70 is a magnet by which a magnetic field is created while current flows. When current does not flow, the magnetic field disappears. The simplest electromagnet 70 includes a solenoid made by winding a coil around an iron core having a cylindrical shape. When current flows in coils wound in a cylindrical shape, a magnetic field is created, and when an iron core is inserted thereinto, a stronger magnetic field is created.

The electromagnet 70 may be provided at the central portion of the pedal body 60. In some cases, the electromagnet 70 may be provided at a position which is not the central portion of the pedal body 60. When necessary, the electromagnet 70 may also be provided at a plurality of positions on the pedal body 60 in a plural number.

A through hole 61 may be formed at the central portion of the pedal body 60.

The pedal body 60 may be inserted into a crank arm 22.

The electromagnet 70 may be installed by being inserted into the through hole 61 of the pedal body 60.

In a state in which power is supplied to the electromagnet 70 of the cleat pedal 23 having the above-described structure, when a rider who wears the shoe 50, for a bicycle, in which the magnetic body 53 is provided in the shoe sole 52, steps on the cleat pedal 23, since the electromagnet 70 is provided in the cleat pedal 23, the magnetic body 53 is magnetically attracted to the electromagnet 70, and the shoe 50 is fixed to the cleat pedal 23.

While a rider is riding the electric bicycle, since the shoe 50 is constantly fixed to the cleat pedal 23 by a magnetic force of the electromagnet, the shoe 50 may be prevented from slipping from the cleat pedal 23.

When the rider releases the shoe from the cleat pedal 23, the magnetic force between the electromagnet 70 and the magnetic body 53 is removed by stopping the supplying of the power to the electromagnet 70 and the coupling is released.

Accordingly, the shoe 50 and the cleat pedal 23 may be more easily coupled to each other or released from the coupling using the electromagnet 70.

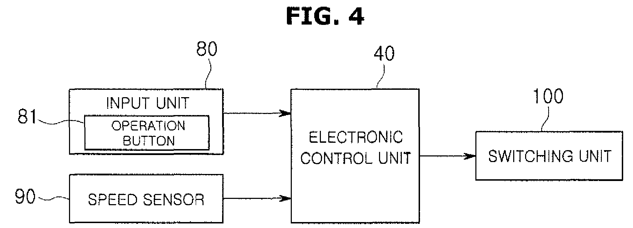

FIG. 4 is a control block diagram of the electric bicycle according to one embodiment of the present invention.

Referring to FIG. 4, the electric bicycle includes the electronic control unit 40 which performs overall control of the electric bicycle.

An input unit 80 and a speed sensor 90 are electrically connected to an input side of the electronic control unit 40.

A switching unit 100 is electrically connected to an output side of the electronic control unit 40.

The input unit 80 receives a command of a rider. The input unit 80 receives a command for coupling the shoe to the cleat pedal or releasing from the coupling using the electromagnet. To this end, the input unit 80 includes an operation button 81 which is manipulable by a rider. Even though it will be described below, when a rider turns on the operation button 81, the electronic control unit 40 turns on the switching unit 100 to operate the electromagnet 70. When the operation button 81 is turned off, the electronic control unit 40 turns off the switching unit 100 to stop the operation of the electromagnet 70.

For reference, the input unit 80 may include the interface 18.

The speed sensor 90 senses a speed of the electric bicycle. The speed sensor 90 may include a wheel speed sensor which senses a speed of the front wheel or the rear wheel.

The speed sensor 90 may include a G-sensor which measures the deceleration of a bicycle or a Hall sensor which detects a rotational speed of the motor 34 which rotates the rear wheel 32 rather than the wheel speed sensor.

The speed sensor 90 transfers information of the sensed speed to the electronic control unit 40.

The switching unit 100 is turned on or off according to a control signal of the electronic control unit 40. The switching unit 100 is provided between a power unit and the electromagnet 70 and switches on or off the power supplied from the power unit to the electromagnet 70. For example, when the switching unit 100 is turned on, power is supplied to the electromagnet 70, and the shoe 50 and the cleat pedal 23 are coupled to each other. When the switching unit 100 is turned off, the supply of power to the electromagnet 70 is cut off, and the shoe 50 and the cleat pedal 23 are released from the coupling.

Hereinafter, a specific operation of the electronic control unit 40 will be described.

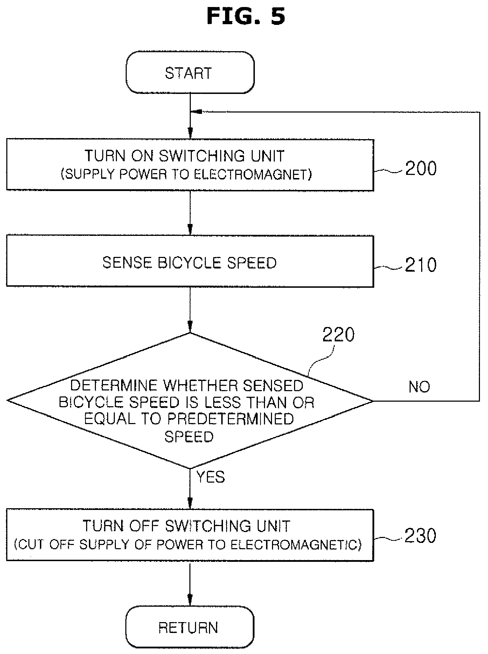

FIG. 5 is a control flow chart of a control method of the electric bicycle according to one embodiment of the present invention.

Referring to FIG. 5, first, the electronic control unit 40 turns on the switching unit 100 (200).

The electronic control unit 40 turns on the switching unit 100 based on a rider's command input through the input unit 80 or a speed of the electric bicycle.

When a rider turns on the operation button 81 provided at the input unit 80, the electronic control unit 40 may receive an operation signal according to the turning on of the operation button, and may turn on the switching unit 100 according to the received operation signal.

In addition, when the rider rides the electric bicycle and the electric bicycle starts to move, a speed of the bicycle gradually increases from 0 kilometers per hour (kph) and reaches a traveling start speed, for example, 6 kph. When the bicycle reaches the traveling start speed, the electronic control unit 40 may turn on the switching unit 100.

When the switching unit 100 is turned on, the electromagnet 70 is supplied with power and becomes a magnet. Accordingly, when a rider steps on the cleat pedal 23 using the shoe, the magnetic body 53 of the bottom of a shoe is attracted to the electromagnet 70 of the cleat pedal 23, and the shoe 50 is coupled to the cleat pedal 23.

The electronic control unit 40 senses a bicycle speed using the speed sensor 90 (210).

The electronic control unit 40 compares the sensed bicycle speed and a predetermined speed and determines whether the sensed bicycle speed is less than or equal to the predetermined speed or not (220). At this time, the predetermined speed may include a speed just before the bicycle stops or a speed when the bicycle enters a speed range in which the rider is difficult to balance (for example, less than or equal to 6 kph).

When a determination result of the operation mode 220 is that the sensed bicycle speed is greater than the predetermined speed, the electronic control unit 40 moves to the operation mode 200 and performs a subsequent operation mode.

Meanwhile, when the determination result of the operation mode 220 is that the sensed bicycle speed is less than or equal to the predetermined speed, the electronic control unit 40 turns off the switching unit 100 (230).

When the switching unit 100 is turned off, the supply of power to the electromagnet 70 is cut off, and a magnetic force disappears. Accordingly, when the rider steps on the cleat pedal 23 with the shoe 50, the magnetic body 53 of the bottom of a shoe is not fixed to the electromagnet 70 of the cleat pedal 23, and is free to move, and the shoe 50 is released from the coupling with the cleat pedal 23. Accordingly, the coupling of the shoe 50 and the cleat pedal 23 and releasing from the coupling may further conveniently and safely be performed.

However, in the previous embodiment, it is described that the switching unit 100 of the bicycle is turned off, it is not limited thereto, and when a deceleration change of the bicycle during traveling is greater than the predetermined value, the switching unit 100 may be turned off.

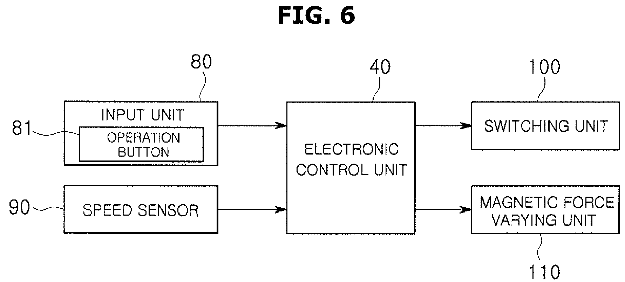

FIG. 6 is a control block diagram of an electric bicycle according to another embodiment of the present invention.

Referring to FIG. 6, an electric bicycle may include a magnetic force varying unit 110.

The magnetic force varying unit 110 varies a magnetic force of an electromagnet 70. The magnetic force varying unit 110 may include a variable resistor, and may vary the strength of the magnetic force of the electromagnet 70 by varying a current or a voltage supplied to the electromagnet 70 using the variable resistor.

The magnetic force varying unit 110 may be integrally formed with a switching unit 100. In this case, the switching unit 100 may include a component capable of controlling a pulse width modulation. As an electronic control unit 40 controls switching by adjusting a duty signal of the switching unit 100, the electronic control unit 40 may adjust a current or a voltage supplied to the electromagnet 70. Accordingly, the strength of the magnetic force of the electromagnet 70 may be varied.

When the bicycle is decelerated while traveling, the electronic control unit 40 may vary the strength of the magnetic force of the electromagnet 70 according to a deceleration degree of the bicycle. For example, when the bicycle is slightly decelerated, the magnetic force of the electromagnet 70 is set as a first strength, and when the bicycle is further decelerated, the magnetic force of the electromagnet 70 is set as a second strength less than the first strength. Accordingly, the coupling or releasing of a shoe 50 and a cleat pedal 23 may gradationally be performed according to a deceleration of the bicycle.

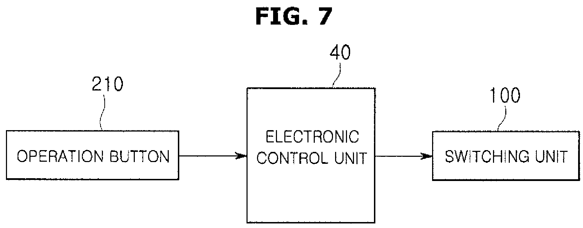

FIG. 7 is a control block diagram of an electric bicycle according to still another embodiment of the present invention.

Referring to FIG. 7, an electric bicycle includes an operation button 210 which is manipulable by a rider, an electronic control unit 40, and a switching unit 100.

The electric bicycle including the above-described structure turns on or off the switching unit 100 by a rider turning on or off the operation button 210 provided at a handle regardless of a bicycle speed.

When the operation button 210 is turned on, the switching unit 100 is turned on to operate an electromagnet, and a shoe 50 and a cleat pedal 23 are coupled to each other.

When the operation button 210 is turned off, the switching unit 100 is turned off to release the operation of the electromagnet to release the coupling between the shoe 50 and the cleat pedal 23.

For reference, the power supplied to an electromagnet 70 may also be directly switched on or off by removing the electronic control unit 40 and the switching unit 100, forming the operation button 210 into a switch form, disposing the operation button 210 at a circuit which supplies power to the electromagnet, and turning on or off the operation button 210.

Even though, in the above-described embodiment of the present invention, one electromagnet 70 is provided at a central portion of a pedal body 60 of the cleat pedal 23, it is not limited thereto, a plurality of electromagnets 70 may also be provided.

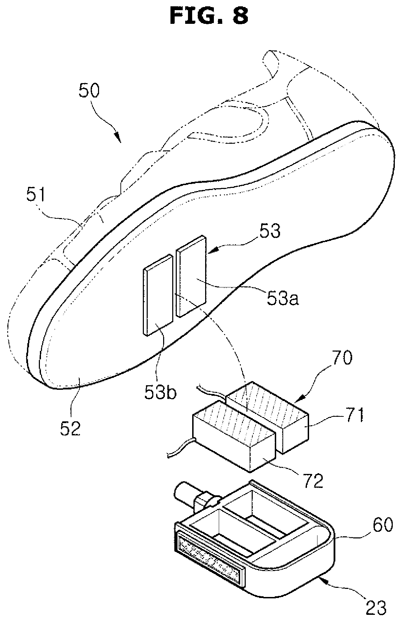

FIG. 8 is a configuration diagram illustrating a cleat pedal of the electric bicycle according to yet another embodiment of the present invention.

Referring to FIG. 8, an electromagnet 70 is disposed in a plural number to include a first electromagnet 71 and a second electromagnet 72.

In this case, a first magnetic body 53a corresponding to the first electromagnet 71, and a second magnetic body 53b corresponding to the second electromagnet 72 are disposed on the shoe sole 52.

When the plurality of electromagnets are provided, an electronic control unit 40 may selectively operate any electromagnets out of the plurality of electromagnets according to a command input through an input unit 80. To this end, the strength of an entire magnetic force of the electromagnets may be varied.

As described above, a varying of the number of electromagnets configured to operate may be performed using a change of a speed or a deceleration of a bicycle.

As is apparent from the above description, since a rider's shoe is coupled to a cleat pedal or released from the coupling using an electromagnet, the shoe can be further conveniently and safely coupled to the cleat pedal and released from the coupling.

In addition, when a rider's shoe is coupled to a cleat pedal or released from the coupling, since an electromagnet operates or stops the operation according to an operation of a rider, the rider can conveniently couple the shoe to the cleat pedal or release the coupling.

In addition, when a rider's shoe is coupled to a cleat pedal or released from the coupling, since an electromagnet operates or stops the operation according to a speed of an electric bicycle, the rider can conveniently couple the shoe to the cleat pedal or release the coupling.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A bicycle comprising:
An electromagnet (70) installed in a pedal body (60) rotatably coupled to a pedal shaft and configured to generate a magnetic force when power is supplied thereto;
a switching unit (100) configured to switch on or off the power supplied to the electromagnet (70); and
an electronic control unit (40) configured to turn on or off the switching unit (100).

2. The bicycle of claim 1, wherein the pedal body (60) includes a cleat pedal body.

3. The bicycle of any of claims 1 or 2, further comprising a speed sensor (90) which senses a speed of the bicycle, wherein the electronic control unit (40) controls operation of the switching unit (100) according to the sensed speed of the bicycle.

4. The bicycle of claim 3, wherein, when the sensed speed of the bicycle is decreased to a predetermined speed while the bicycle is traveling, the electronic control unit (40) turns off the switching unit (100) to cut off the power supplied to the electromagnet (70).

5. The bicycle of any of claims 1 to 4, further comprising a speed sensor (90) which senses a deceleration of the bicycle, wherein the electronic control unit (40) controls operation of the switching unit (100) according to a change of the sensed deceleration of the bicycle.

6. The bicycle of any of claims 1 to 5, further comprising an input unit (80) configured to receive a command from a rider, wherein the electronic control unit (40) controls an operation of the switching unit (100) according to the command input through the input unit (80).

7. The bicycle of any of claims 1 to 6, further comprising a speed sensor (90) configured to sense a speed of the bicycle, wherein the electromagnet (70) including a plurality of electromagnets is provided at the pedal body (60), and the electronic control unit (40) controls operation of the switching unit (100) so that as the sensed bicycle speed is decreased, the number of the electromagnets to which power is supplied among the plurality of electromagnets is decreased.

8. A control method of a bicycle including a cleat pedal (23) in which an electromagnet (70) which is supplied with power and generates a magnetic force is installed, comprising:
supplying power to an electromagnet (70) while a bicycle is traveling;
sensing a speed of the bicycle; and
cutting off the power supplied to the electromagnet (70) when the sensed speed of the bicycle is decreased to a predetermined speed or when a change of the sensed deceleration of the bicycle is greater than a predetermined value.
